(19) Europäisches Patentamt
European Patent Office
Office européen des brevets

(11) Veröffentlichungsnummer : **0 292 785 B1**

# (12) EUROPÄISCHE PATENTSCHRIFT

(45) Veröffentlichungstag der Patentschrift : **05.06.91 Patentblatt 91/23**

(51) Int. Cl.[5] : **C08F 8/00,** C08G 64/18

(21) Anmeldenummer : **88107551.9**

(22) Anmeldetag : **11.05.88**

## (54) Vinylcopolymerisate mit aufgepfropften Polycarbonatketten, ihre Herstellung und Verwendung.

(30) Priorität : **22.05.87 DE 3717172**

(43) Veröffentlichungstag der Anmeldung : **30.11.88 Patentblatt 88/48**

(45) Bekanntmachung des Hinweises auf die Patenterteilung : **05.06.91 Patentblatt 91/23**

(84) Benannte Vertragsstaaten : **DE FR GB IT NL**

(56) Entgegenhaltungen :
**DE-A- 1 770 144**
**DE-A- 1 795 840**
**DE-A- 2 019 992**
**DE-A- 2 019 993**
**DE-A- 2 019 994**
**DIE ANGEWANDTE MAKROMOLEKULARE CHEMIE, Band 60/61, Nr. 861, April 1977, Seiten 125-137; D. MARGOTTE et al.: "Polycarbonat-gepfropfte Polyvinylverbindungen"**

(73) Patentinhaber : **BAYER AG**
**W-5090 Leverkusen 1 Bayerwerk (DE)**

(72) Erfinder : **Dujardin, Ralf, Dr.**
**Bodelschwinghstrasse 18**
**W-4150 Krefeld (DE)**
Erfinder : **Ebert, Wolfgang, Dr.**
**Dörperhofstrasse 31**
**W-4150 Krefeld (DE)**
Erfinder : **Meyer, Rolf-Volker, Dr.**
**Buchheimerstrasse 23**
**W-4150 Krefeld (DE)**
Erfinder : **Berg, Klaus, Dr.**
**Hansastrasse 124**
**W-4150 Krefeld (DE)**
Erfinder : **Grigo,Ulrich,Dr.**
**Michelscheide 9**
**W-4152 Kempen 3 (DE)**
Erfinder : **Wehnert,Wolfgang,Dr.**
**Bodelschwinghstrasse 14**
**W-4150 Krefeld (DE)**

**EP 0 292 785 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der vorliegenden Erfindung ist ein Verfahren zur Herstellung von Vinylcopolymerisaten mit aufgepfropften Polycarbonatketten, deren Vinylcopolymerisatpfropfgrundlage ein $\overline{M}n$ (Zahlenmittelmolekulargewicht, ermittelt durch Gelpermeationschromatographie) von 45000 bis 95000 hat, deren Polycarbonatketten einen Polykondensationsgrad an wiederkehrenden Carbonatstruktureinheiten von 35 bis 70 haben, und die ein Gewichtsverhältnis von Vinylcopolymerisatpfropfgrundlage zu aufgepfropften Polycarbonatketten zwischen 35 Gew.-% zu 65 Gew.-% und 55 Gew.-% zu 45 Gew.-% haben, das dadurch gekennzeichnet ist, daß man 95 mol-% bis 99,5 Mol-% an Styrol und 5 Mol-% bis 0,5 Mol-% an Verbindungen der Formel (I)

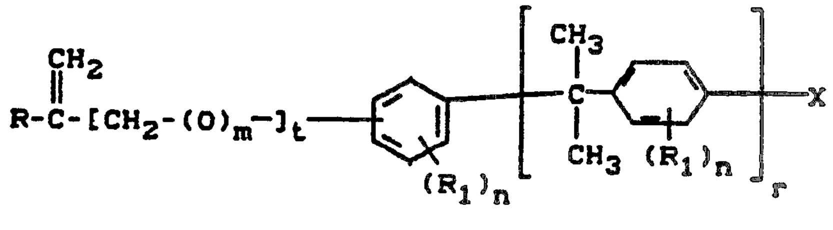

(I)

worin

| | |
|---|---|
| R = | H oder $C_1$-$C_4$-Alkyl, |
| $R_1$ = | Cl, Br, $C_1$-$C_4$-Alkyl, Cyclohexyl oder $C_1$-$C_4$-Alkoxy, |
| m = | 0 oder 1, |
| n = | 0, 1 oder 2, |
| r = | 0 oder 1, |
| t = | 0 oder 1 und |
| X = | $-O-Si(CH_3)_3$ sind, |

durch radikalische initierte Massepolymerisation bis zu einem gewünschten Molekulargewicht ($\overline{M}n$, Zahlenmittelmolekulargewicht) zwischen 45000 und 95000 nach bekannten Verfahren copolymerisiert, und danach das Polymerisat ohne Isolierung mit Diphenolen, Phosgen und Monophenolen in wäßrig-alkalischer Phase unter Zusatz eines inerten organischen Lösungsmittels unter den Bedingungen des Zweiphasengrenzflächenverfahrens umsetzt, wobei die Menge an Diphenol so gewählt ist, daß der Gehalt an Polycarbonatketten im gepfropften Vinylcopolymerisat zwischen 65 Gew.-% und 45 Gew.-%, bezogen auf das Gesamtgewicht des gepfropften Vinylcopolymerisats inclusive aufgepfropften Polycarbonatketten, beträgt, und wobei die Menge an Kettenabbrecher so bemessen ist, daß die mittlere Kettenlänge der aufgepfropften Polycarbonatseitenketten jeweils zwischen 35 und 70 wiederkehrende Carbonatstrukureinheiten aufweist, und wobei die Menge an inerten organischen Lösungsmittel so bemessen sein muß, das die Endviskosität der organischen Phase der Reaktionsmischung zwischen 5 und 25 mPa·s, vorzugsweise zwischen 10 und 20 mPa·s liegt.

Als Endviskosität ist die mit einem Höppler-Viskosimeter bestimmte absolute Viskosität der organischen Phase des Reaktionsgemisches nach abgeschlossener Polykondensation bei 20°C zu verstehen.

Aus der DE-AS 1 153 527 ist ein Verfahren zur Herstellung von Mischpolymerisaten mit Phenolresten als Seitenketten aus ungesättigten Phenolen und anderen olefinischen Verbindungen bekannt. Die Mischpolymerisation erfolgt in Gegenwart von Lewissäuren oder ähnlich wirkenden Säuren, ist somit ionisch katalysiert. Die erhaltenen Produkte haben Durchschnittsmolekulargewichte zwischen etwa 500 und 2000.

Aus der DE-OS 1 770 144 bzw. der DE-OS 1 795 840 bzw. dem US-Patent 3 687 895 ist ebenfalls die Herstellung von entsprechenden Vinylmischpolymerisaten bekannt. Die Copolymerisation kann sowohl ionisch als auch radikalisch katalysiert werden (Seite 4 der DE-OS 1 770 144).

Die Molekulargewichte (Zahlenmittel) $\overline{M}n$ können gemäß Formel II von Seite 3 der DE-OS 1 770 144 zwischen etwa 3000 (l 5 und r' = 5) und etwa 20 000 000(l = 200 und r' = 1000) liegen, jedoch werden in den Beispielen $M_7$ und $M_8$ jeweils nur $\overline{M}n$ (Zahlenmittelmolekulargewichte) von 5000 erreicht. (Siehe dazu die berichtigte DE-AS 1 770 144, Spalte 8). Darüberhinaus erreichen die aufgepfropften Polycarbonatketten in den entsprechenden Beispielen 12 und 13 der DE-AS 1 770 144 nur einen Polymerisationsgrad von 5,5 bzw. 14,3, während gemäß Formel I ein Polymerisationsgrad von 5 bis 100 möglich ist.

Mit anderen Worten, die gepfropften Vinylcopolymerisate gemäß vorliegender Erfindung fallen zwar unter die allgemeine Formel der DE-AS 1 770 144 bzw. des US-Patents 3 687 895, aber nie werden die geforderten Kriterien, nämlich $\overline{M}n$ der Pfropfgrundlage von 45000 bis 95000, wiederkehrende Carbonatstruktureinheiten von 35 bis 70 in den Seitenketten und Gewichtsverhältnisse von Polycarbonatketten zu Pfropfgrundlage zwischen 65 Gew.-% zu 35 Gew.-% und 45 Gew.-% zu 55 Gew.-% in der Patentschrift zusammen konkret offenbart. Immer ist mindestens eines dieser Kriterien nicht erfüllt.

Aus dem US-Patent 3 856 886 sind ebenfalls entsprechende Vinylcopolymerisate mit mittleren Molekulargewichten $\overline{M}n$ (Zahlenmittel) von 10000 bis 200000, vorzugsweise von 20000 bis 50000 (Spalte 2, Zeilen 10 bis 16 des US-Patents 3 856 886) bekannt. Auf diese Vinylcopolymerisate werden ebenfalls Polycarbonat aufgepfropft, wobei auf die bereits zitierte US-Patentschrift 3 687 895 verwiesen wird.

Wiederum sind die gepfropften Vinylcopolymerisate gemäß vorliegender Erfindung unter der allgemeinen Formel des US-Patents 3 856 886 subsummiert, aber nie sind die geforderten 3 Kriterien in der Patentschrift zusammen konkret offenbart. Immer ist mindestens eines dieser Kriterien nicht erfüllt.

In dem US-Patent 3 856 886 werden die gepfropften Vinylcopolymerisate mit Vinylpolymerisaten und/oder thermoplastischen Polycarbonaten abgemischt.

Aus den Beispielen dieses US-Patents ergibt sich nun, daß für die Abmischungen mit Vinylpolymerisaten, also beispielsweise mit Polystyrol, nur Pfropfpolymerisate mit wenig Pfropfgrundlage ausgewählt werden. (In den Beispielen 1 bis 7a nur jeweils 5 Gew.-% Pfropfgrundlage).

Aus den Beispielen 8 bis 15 ergibt sich, daß für die Abmischungen mit thermoplastischen Polycarbonaten die Pfropfgrundlage des gepfropften Vinylpolymerisate höher liegt, nämlich zwischen 10 und 30 Gew.-%.

Aus den Beispielen 16 bis 24 ergibt sich wiederum, daß die eingesetzten Pfropfcopolymerisate eine Pfropfgrundlage von nur 5 Gew.-% haben.

Die Abmischungen der gepfropften Vinylcopolymerisate mit anderen Vinylpolymerisaten haben keine Unverträglichkeitserscheinungen, haben eine verbesserte Verseifungsstabilität, ein verbessertes Fließverhalten und eine verbesserte Thermostabilität. (Siehe Spalte 4, Zeilen 16 bis 53 von US-PS 3 856 886 und Seiten 3/4 von DE-OS 2 019 992).

Die Abmischungen der gepfropften Vinylcopolymerisate mit thermoplastischen Polycarbonaten haben eine verbesserte Alkali- und Heißwasserbeständigkeit, außerdem verbesserte mechanischen Eigenschaften und zeigen ebenfalls keine Unverträglichkeitserscheinungen. (Spalte 6, Zeilen 47 bis 61 von US-PS 3 856 886 sowie Seiten 3/4 der DE-OS 2 019 994).

Die Abmischungen der gepfropften Vinylcopolymerisate mit thermoplastischen Polycarbonaten und mit anderen Vinylpolymerisaten haben eine verbesserte Alkali- und Heißwasserbeständigkeit, keine Unverträglichkeitserscheinungen, verbesserte mechanische und thermische Eigenschaften und verbesserte Fließeigenschaften. (Siehe Spalte 10, Zeilen 4 bis 36 von US-PS 3 856 886 sowie Seiten 3/4 der DE-OS 2 019 993).

Aus der DE-OS 1 950 982 bzw. dem US-Patent 3 758 597 sind schließlich auch Mischpolymerisate mit Phenolresten als Seitenketten bekannt; über die Molekulargewichte dieser Vinylcopolymerisatpfropfgrundlagen sind keine Angaben gemacht. Es ist außerdem die Aufpfropfung mit Polycarbonatketten beschrieben, wobei der Gehalt an Pfropfgrundlage im gepfropften Produkt des einzigen Ausführungsbeispiels 5 Gew.-% beträgt.

Aus der DE-OS 2 357 192 bzw. dem entsprechenden US-Patent 3 991 009 sind ebenfalls entsprechende gepfropfte Vinylcopolymerisate bekannt. Die ungepfropften Copolymerisate sollen ein Molekulargewicht ($\overline{M}n$, durch Osmose ermittelt) von 10000 bis 100000, vorzugsweise von 10000 bis 40000 haben. Die in den Beispielen beschriebenen gepfropften Vinylcopolymerisate haben einen Anteil von 10 Gew.-% bzw. 20 Gew.-% an Copolymerisatgrundlage.

In der DE-OS 2 357 192 bzw. dem US-Patent 3 991 009 wird die Abmischung der gepfropften Vinylcopolymerisate mit Pfropfkautschuken gelehrt, wobei als Pfropfkautschuke auch Gemische von reinen Pfropfpolymerisaten mit Copolymerisaten verstanden werden, aber auch Gemische von Copolymerisaten (siehe Mischung e)).

Schließlich sind polycarbonatgepfropfte Polyvinylverbindungen noch in "angewandte Makromolekulare Chemie 60/61 (1977) Seiten 125 bis 137 (Nr. 861) beschrieben. Jedoch ist auch hier das $\overline{M}n$ der Pfropfgrundlage nur zwischen 2000 und 4000 und der Anteil an Pfropfgrundlage im gefropften Vinylpolymerisat maximal 20 Gew.-%.

Bekannt sind außerdem aus der DE-OS 2 329 585 (Le A 15024) Mischungen aus Polycarbonaten, die zumindest 50% aus wiederkehrenden Struktureinheiten der folgenden Formel

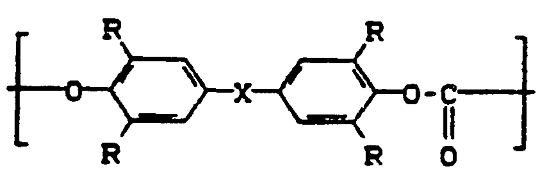

bestehen, worin R für $C_1$-$C_3$-Alkyl steht und X die üblichen Biphenol-Bindeglieder darstellt, mit thermoplastischen Harzen, wie Polystyrolen, die teilweise eine außergewöhnlich gute Verträglichkeit haben, was sich unter anderem in der Transparenz derartiger Mischungen äußert.

In EP-A 0 181 143 sind Mischungen von Polycarbonaten mit Poly-(p-methylstyrolen) beschrieben, wobei bei einer Menge von mehr als 20 Gew.-%, im Polycarbonat-Poly-(-p-methylstyrol)-Gemisch, an Poly-(p-methylstyrol) Unverträglichkeitserscheinungen und damit eine ungünstige Beeinflussung des Eigenschaftsbildes eintreten.

Demgegenüber wurde nun gefunden, daß die nach dem erfindungsgemäßen Verfahren erhältlichen gepfropften Vinylpolymerisate, deren Pfropfgrundlage ein $\overline{M}n$ von 45000 bis 95000, vorzugsweise von 60000 bis 80000 hat, deren Gehalt an Pfropfgrundlage zwischen 35 Gew.-% und 55 Gew.-%, vorzugsweise zwischen 40 Gew.-% und 50 Gew.-%, bezogen auf Gesamtgewicht an gefropften Vinylcopolymerisat inclusive aufgepfropften Polycarbonatketten, beträgt und deren Polycarbonatketten einen Polykondensationsgrad an wiederkehrenden Carbonatstruktureinheiten von 35 bis 70, ausgezeichnete Verträglichkeitsmacher für Polycarbonat-Polystyrol-Gemische sind, so daß derartige Gemische für optische Zwecke, insbesondere für optische Datenspeicher Verwendung finden können.

Gegenstand der vorliegenden Erfindung sind somit die nach dem erfindungsgemäßen Verfahren erhältlichen gepfropften Vinylcopolymerisate, sowie deren Verwendung als Modifikatoren für Mischungen aus thermoplastischen Polycarbonaten und thermoplastischen Polystyrolen.

Gegenstand der vorliegenden Erfindung sind außerdem Mischungen von

A) 70 bis 20 Gew.-%, vorzugsweise 65 bis 40 Gew.-% eines thermoplastischen, aromatischen Polycarbonats auf Basis von Diphenolen der Formel (II)

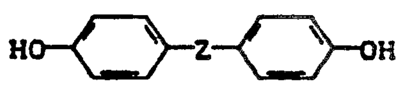

(II)

worin

Z eine Einfachbindung, ein Alkylen-Rest mit 1 bis 8 C-Atomen, ein Alkyliden-Rest mit 2 bis 12 C-Atomen, ein Cyclohexyliden-Rest, ein Benzyliden-Rest, ein Methyl-benzyliden-Rest, ein Bis-(phenyl)methylen-Rest, $-S-$, $-SO_2-$, $-CO-$ oder $-O-$ ist, mit $\overline{M}w$ (Gewichtsmittelmolekulargewichten, ermittelt in bekannter Weise über die relative Lösungsviskosität) zwischen 15000 und 120000, vorzugsweise zwischen 20000 und 80000 und insbesondere zwischen 25000 und 45000, und

B) 30 bis 80 Gew.-%, vorzugsweise 35 bis 60 Gew.-% eines thermoplastische Polystyrols mit einem $\overline{M}w$ (Gewichtsmittelmolekuargewicht, ermittelt durch Gelpermeationschromatographie in bekannter Weise) von 20000 bis 400000, vorzugsweise von 30000 bis 330000 und insbesondere 60000 bis 260000, die dadurch gekennzeichnet sind, daß sie 0,5 Gew.-% bis 15 Gew.-%, vorzugsweise 1,0 Gew.-% bis 12 Gew.-% und insbesondere 2 Gew.-% bis 9 Gew.-%, bezogen auf jeweils 100 Gew.-% an A) + B), an erfindungsgemäß erhältlichem, gefropftem Vinylcopolymerisat enthalten.

Mischungen von Polycarbonaten mit Polystyrolen sind gemäß japanischer Offenlegungsschrift Sho 61-19 656 der Mitsubishi für optische Zwecke ungeeignet, da sie weißfleckig und trüb sind. (Siehe Vergleichsbeispiel 3 der Sho 61-19 656).

Aus der europäischen Offenlegungsschrift Nr. 019 9824 sind optische Harzmaterialien bekannt. Diese können aus Gemischen von Harzen bestehen, wobei kleine Mengen einer dritten Substanz zugesetzt werden können, um die Verträglichkeit der Gemische zu verbessern (Seite 11 von EP-A 0 199 824). Als solche wird beispielsweise ein Polystyrol-Polycarbonat-Blockcopolymer in Mischungen von Bisphenol-A-Polycarbonat mit Styrol-Maleinsäureanhydrid-Copolymer im Beispiel 2 der EP-A 0 199 824 genutzt. Die Möglichkeit von Mischungen aus Polycarbonat und Polystyrol wird in der EP-A 0 199 824 angesprochen, aber nicht verifiziert. (Seiten 7, 8 und 11 der EP-A 0 199 824) Pfropfcopolymere sind auch als optische Harzmaterialien im Sinne von EP-A 0 199 824 geeignet. (Seite 9, Mitte bis Seite 11, Absatz 1 von EP-A 0 199 824 sowie Beispiel 4 von EP-A 0 199 824). Ein Hinweis auf die speziellen, gepfropften Vinylcopolymerisate gemäß vorliegender Erfindung ist der EP-A 0 199 824 nicht zu entnehmen.

Es lag auch nicht nahe, die gepfropften Vinylcopolymerisate gemäß vorliegender Erfindung als besonders geeignete Modifikatoren einzusetzen, da aus den Beispielen des US-Patents 3 856 886 hervorgeht, einerseits für entsprechende Dreiermischungen gepfropfte Vinylcopolymerisate mit einem geringen Anteil an Vinylcopolymerisat-Pfropfgrundlage einzusetzen, und andererseits für die Mischungen aus thermoplastischen Polycarbonaten mit gepfropften Vinylcopolymerisaten, Pfropfprodukte einzusetzen, die einen höheren Anteil an

Vinylcopolymerisat-Pfropfgrundlage enthalten.

Der Zusatz von zusätzlichem Vinylpolymerisat führt daher vorzugsweise zu einer Minderung des Gehalts an Pfropfgrundlage im gepfropften Vinylcopolymerisat, um verträgliche Mischungen aus Polycarbonaten und Vinylpolymerisaten herzustellen.

Aus diesem Grund lag es für den Fachmann nicht nahe, eine verbesserte Verträglichkeit zwischen thermoplastischen Polycarbonat und Polystyrol dadurch herzustellen, daß gepfropfte Vinylcopolymerisate verwendet werden, deren Vinylcopolymerisatpfropfgrundlage erhöht, also zwischen 35 Gew.-% und 55 Gew.-% liegt, um eine optimale Verträglichkeit für optische Anwendungen zu erzielen, d.h. Gemische mit geringer optischer Anisotropie zu erhalten.

Gegenstand der vorliegenden Erfindung ist somit auch die Verwendung der erfindungsgemäßen Mischungen aus den Komponenten A), B) und den gepfropften Vinylpolymerisaten als Substrate für optische Datenspeicher.

Die zur Herstellung der erfindungsgemäßen gepfropften Vinylcopolymerisate erforderlichen Verbindungen der Formel (I) sind entweder bekannt oder nach bekannten Verfahren herstellbar. (Siehe beispielsweise H. Niederprüm, P. Voss, V. Beyl Liebigs Ann., 1973, 20-32 und Japan Kokai Tokyo Koko 79/122 257).

Beispiele für solche Verbindungen sind beispielsweise 3-Trimethylsiloxystyrol, 4-Trimethylsiloxystyrol, 3-Trimethylsilyloxy-α-methylstyrol, 4-Trimethylsiloxy-α-methylstyrol, 2-Methyl-4-trimethylsiloxystyrol, 2-Methyl-4-trimethylsilox-α-methylstyrol, 2,6-Dichlor-4-trimethylsiloxy-α-methylstyrol, 3-Trimethylsiloxy-allylbenzol, 4-Trimethylsiloxy-allylbenzol und 4-Trimethylsiloxyphenyl-allylether.

Eine Möglichkeit zur Herstellung der Verbindungen der Formel (I) besteht darin, daß man die entsprechenden Phenole (Ia), welche den Verbindungen der Formel (I) entsprechen, worin jedoch X = OH ist, mit Hexamethyldisilazan bei 150°C umsetzt (H. Niederprüm, P. Voss, V. Beyl, Liebigs Ann., 1973, 20-32).

Die radikalisch initierte Massepolymerisation kann beispielsweise wie nachstehend beschrieben, erfolgen: 95-99,5 mol-% Vinylaromat und 0,5-5 mol-% einer Verbindung der Formel (I) werden unter Stickstoffatmosphäre mit 0,05-0,25 Gew.-% α,α'-Azodiisobutyronitril, bezogen auf die eingesetzte Gewichtsmenge an Vinylaromaten, versetzt und 20-40 Stunden bei 60-100°C polymerisiert. Die Reaktionsbedingungen bzgl. Temperatur und Initiatorkonzentration entsprechen denen bekannter Verfahren (siehe auch Houben-Weyl Band 14/1, "Makromolekulare Stoffe" Seite 753 f.f., Georg Thieme Verlag, Stuttgart 1962).

Die Polymerisationszeit richtet sich nach dem Anteil an Comonomeren der Formel (I) und dem angestrebten Molekulargewicht der Vinylcopolymerisatpfropfgrundlage. Bei angestrebtem, hohem Molekulargewicht der Pfropfgrundlage und gleichzeitigem, hohem Anteil an Verbindungen der Formel (I) ist die Polymerisationszeit entsprechend länger zu wählen als bei einem angestrebten niedrigeren Molekulargewicht der Pfropfgrundlage und/oder bei niedrigem Anteil an Verbindungen der Formel (I).

Die resultierenden, noch ungepfropften Copolymerisate bestehen somit aus bifunktionellen Struktureinheiten der Formel (III)

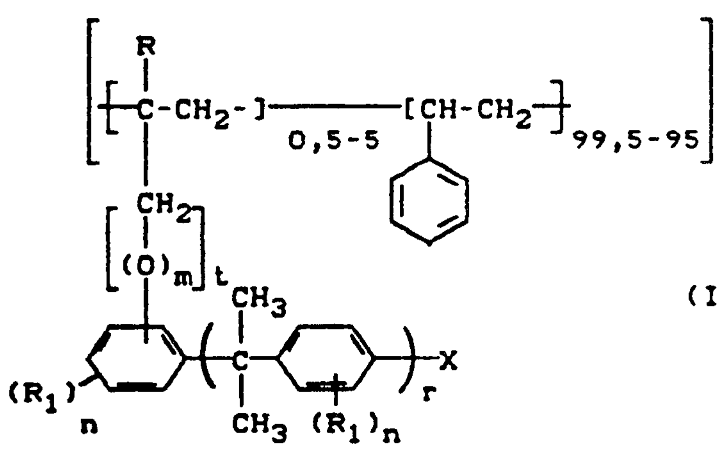

(III)

worin

R, $R_1$, m, n, r, t und X die für Formel (I) genannte Bedeutung haben.

Die für die Pfropfreaktion geeigneten Diphenole sind die für die bekannte Herstellung von thermoplastischen Polycarbonaten üblichen Diphenole, vorzugsweise solche der Formel (IV) HO-D-OH, worin D ein zweibindiger, organischer Rest mit 6 bis 30 C-Atomen ist, und insbesondere solche der Formel (II).

Beispiele für geeignete Diphenole sind beispielsweise 2,2-Bis(4-hydroxyphenyl)-propan, 2,2-Bis(3,5-dimethyl-4-hydroxyphenyl)-propan, 2,2-Bis(3,5-dichlor-4-hydroxyphenyl)-propan und 1,1-Bis(4-hydroxyphenyl)-cyclohexan, außerdem Polydialkylsiloxandiphenole, wie sie nachfolgend unter Formel (IIa) aufgeführt sind.

Die Pfropfseitenketten können sowohl ein als auch mehrere Diphenole einkondensiert enthalten, hierbei sei erwähnt, daß die Diphenole der Formel (IIa) in den Seitenketten in einer Menge von maximal 20 Gew.-%, bezogen auf das Gesamtgewicht der Polycarbonatseitenketten, enthalten sind.

Geeignete Monophenole der Kettenabbrecher sind beispielsweise Phenol, p-tert.-Butylphenol, p-Cumylphenol und p-Isooctylphenol.

Inerte organische Lösungsmittel für die Pfropfungsreaktion sind beispielsweise Methylenchlorid und Chlorbenzol.

Die Gewichtsmenge an inertem Lösungsmittel beträgt etwa das 20-25 fache, bezogen auf die in der Pfropfungsreaktion eingesetzte Gewichtsmenge an Pfropfgrundlage. Die Menge an Lösungsmittel richtet sich nach der jeweils eingesetzten Gewichtsmenge an Pfropfgrundlage im herzustellenden Pfropf; bei geringer Menge an Pfropfgrundlage reicht eine geringere Menge, bei einer höheren Menge an Pfropfgrundlage im Pfropf wird eine größere Menge an Lösungsmittel benötigt. Die Menge an Lösungsmittel ist natürlich so zu wählen, daß die erhaltene Endviskosität in den anfangs erwähnten Bereich fällt.

Als wäßrige alkalische Phase dient beispielsweise wäßrige Natronlauge oder Kalilauge.

Geeignete Katalysatoren sind beispielsweise tertiäre Amine, wie z.B. Triethylamin oder N-Ethylpiperidin.

Die resultierenden, gepfropften Copolymerisate enthalten somit Struktureinheiten der Formel (IIIa), welche den Struktureinheiten der Formel (III) entsprechen, worin jedoch

$$X = -O-\left[-\underset{\substack{\| \\ O}}{C}-\text{Diphenolat}-\right]_p-\underset{\substack{\| \\ O}}{C}-\text{Monophenolat ist,}$$

worin p eine ganze Zahl zwischen 35 und 70 ist und Diphenolat bzw. Monophenolat Reste wie –O-D-O– bzw.

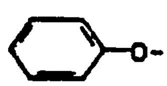 darstellen, welche naturgemäß aus der

Umsetzung mit Phosgen in wäßrig alkalischer Phase resultieren, d.h. Reste sind, die durch Abzug der phenolischen H-Atome aus Diphenolen bzw. Monophenolen resultieren.

Die erfindungsgemäße Pfropfreaktion läßt offen, ob alle Pfropfstellen X der Pfropfgrundlage jeweils an der Pfropfreaktion partizipieren, gegebenenfalls kann reines Polycarbonat in untergeordnetem Maße anfallen.

Die als Komponente A) einzusetzenden Polycarbonate sind als solche bekannt oder nach bekannten Verfahren herstellbar. (Siehe bzw. "H. Schnell, Chemistry and Physics of Polycarbonates, Interscience Publishers, New York, 1964).

Polycarbonate auf Basis der Diphenole der Formel (II) sind solche, die zumindest 80 Gew.-%, bezogen auf die Molsumme der einzusetzenden Diphenole, an Diphenolen der Formel (II) einkondensiert enthalten.

Bevorzugte andere Diphenole, die in Mengen von maximal 20 Gew.-%, bezogen auf die Molsumme der einzusetzenden Diphenole, eingesetzt werden, sind solche der Formel (IIa) (siehe EP-0 122 535).

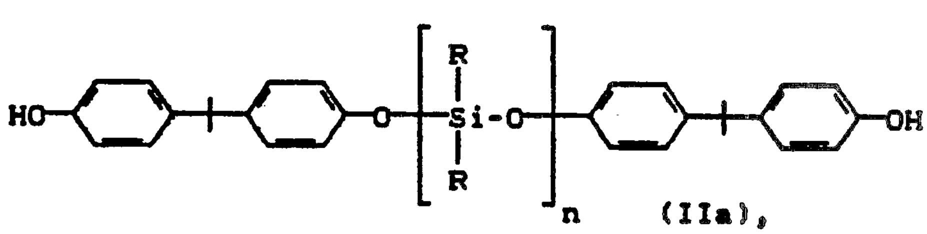

(IIa),

worin

R = $C_1$-$C_6$-Alkyl, vorzugsweise $CH_3$–, und

n = 20 bis 200, vorzugsweise 40 bis 80 sind.

Bevorzugte Diphenole der Formel (II) sind 2,2-Bis-(4-hdyroxyphenyl)-propan und 1,1-Bis(4-hydroxyphenyl)-cyclohexan.

Geeignete Diphenole der Formel (IIa) sind beispielsweise solche der Formel (IIb)

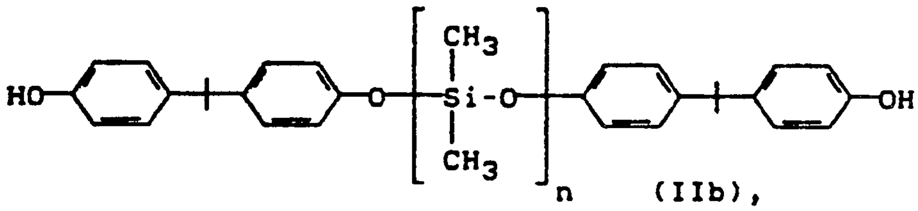

(IIb),

worin

n = 40, 60 oder 80 ist.

Geeignete Kettenabbrecher zur Herstellung der Polycarbonate der Komponente A) sind beispielsweise Phenol, p-tert.-Butylphenol und p-Isooctylphenol.

Die Polycarbonate gemäß Komponente A) sind sowohl Homopolycarbonate als auch Copolycarbonate.

Die aromatischen Polycarbonate gemäß Komponente A) können sowohl linear als auch verzweigt sein.

Die Verzweigung kann durch den Einbau geringer Mengen, vorzugsweise zwischen 0,05 und 2,0 Mol-%, bezogen auf eingesetzte Diphenole, an drei- oder mehr als dreifunktionellen Verbindungen, z.B. solchen mit drei oder mehr als drei phenolischen Hydroxygruppen in bekannter Weise erfolgen.

Derartige Polycarbonate sind bekannt. (Siehe beispielsweise DE-PS 2 500 092 bzw. US-Patent 4 185 009).

Einige der verwendbaren Verbindungen mit drei oder mehr als drei phenolischen Hydroxygruppen sind beisielsweise Phloroglucin, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, 2,6-Bis-(2'-hydroxy-5'-methylbenzyl)-4-methylphenol, 2-(4-hydroxyphenyl)-2-(2,4-di-hydroxyphenyl)-propan und 1,4-Bis-(4,4'-dihydroxytriphenyl-methyl)-benzol. Einige der sonstigen dreifunktionellen Verbindungen sind 2,4-Dihydroxybenzoesäure, Trimesinsäure, Cyanurchlorid und 3,3-Bis-(4-hydroxy-3-methyl-phenyl)-2-oxo-2,3-dihydroindol.

Es kann sowohl ein Polycarbonat allein als auch ein Gemisch verschiedener Polycarbonate als Komponente A) fungieren.

Polystyrole gemäß Komponente B) sind sowohl Homopolymere als auch Copolymere. Sie sind entweder als solche bekannt, oder nach bekannten Verfahren erhältlich. Geeignete Monomere für die erfindungsgemäß einzusetzenden Polystyrole sind vor allem Styrol selbst, o–, p– und m-Methylstyrol, p-Ethylstyrol, 2,4-Dimethylstyrol, o-Chlorstyrol, 2,5-Dichlorstyrol, Vinylnaphthalin und Vinylbiphenyl.

Beispiele sind die entsprechenden Homopolymere der erwähnten Monomeren.

Beispiele für Copolymere sind Styrol-α-Methylstyrol-Copolymere, Styrol-p-Methylstyrol-Copolymere, Copolymere aus verschiedenen Methylstyrol-Isomeren ("Vinyltoluol"), auch in Kombination mit Styrol sowie Copolymere von Styrol und Divinylbenzol.

Bevorzugte Styrolpolymere sind die Homopolymere der Styrols, des p-Methylstyrols und des o-Chlorstyrols, sowie die Copolymeren von Styrol und α-Methylstyrol, von Styrol und p-Methylstyrol, Polyvinyltoluole der verschiedensten Vinyltoluole, gegebenenfalls in Kombination mit Styrol.

Es kann sowohl ein Polystyrol allein, als auch ein Gemisch verschiedener Polystyrole als Komponente B) fungieren.

Zur Herstellung der erfindungsgemäßen Mischungen können die Polycarbonatkomponente, die Polystyrolkomponente und die Pfropfcopolymerkomponente oberhalb der Erweichungstemperatur der verwendeten Polycarbonatkomponente vermischt werden. Dies kann beispielsweise durch Compoundierung bei der Extrusion in den üblichen Schneckenmaschinen in einem einzigen Arbeitsgang erfolgen und zwar beispielsweise bei Temperaturen zwischen 280°C und 350°C.

Zur Compoundierung eignen sich bekannte Apparaturen, Doppelschneckenextruder werden bevorzugt eingesetzt.

Es ist selbstverständlich, daß im Bedarfsfall bei derartigen Polymermischungen die für Polycarbonat bzw. Polystyrol üblichen Stabilisatorsysteme und/oder Entformungsmittel verwendet werden können, die durch

Compoundierung, wie oben beschrieben, in bekannter Weise eingearbeitet werden können.

Die Verwendung von Kunststoffen oder Kunststoffgemischen als Substrate für optische Datenspeicher setzt folgendes voraus :

Die Information optischer Datenträger wird mit dem linear polarisierten Licht eines Lasers gelesen und im Falle beschreibbarer Datenspeicher auch eingeschrieben. Eines der Systeme für beschreib- und löschbare Verfahren sind die magnetooptischen Datenspeicher : Hier muß besonderer Wert auf doppelbrechungsfreies Substratmaterial gelegt werden, da eine geringfügige Drehung (unter 1°) der Licht-Schwingungsebene schon als Signal gelesen wird.

Doppelbrechung setzt sich in Kunststoff (Thermoplasten) im wesentlichen aus 2 Faktoren zusammen : Einer materialspezifischen Komponente einerseits und einem verarbeitungsbedingten Anteil, der auch als Orientierungsdoppelbrechung bezeichnet wird, andererseits.

Doppelbrechungsarme, thermoplastische Formteile können somit durch zweierlei Maßnahmen hergestellt werden, entweder durch die Wahl geeigneter Verarbeitungsparameter, beispielsweise durch Verarbeitung von niedrigviskosen Typen bei relativ hoher Temperatur wie etwa beim Spritzgießen oder Spritzprägen von Audio-Compact-Discs aus thermoplastischem Polycarbonat, oder durch den Einsatz von Material, das von sich aus nur geringe Neigung zur Doppelbrechung zeigt, wie beispielsweise Polymethylmethacrylate, welche für die Herstellung von Video-Discs verwendet werden.

Beschreibbare Speicherverfahren wie z.B. magnetooptische Systeme erfordern beim Beschreiben eine relativ hohe Energie, um ein akzeptables Signal/Rausch-Verhältnis zu bekommen. Dazu wird eine Optik mit großer numerischer Apretur verwendet. Durch den Öffnungswinkel der Schreib- und Leseoptik bedingt, bekommt eine möglichst geringe optische Anisotropie auch für den Strahlenverlauf in tangentialer und radialer Richtung erhebliche Bedeutung. So zeigen Compact Discs, die in axialer Richtung bereits sehr niedrige Gangunterschiede der Doppelbrechung (unter 10 nm/mm) aufweisen, tangential und radial noch hohe Meßwerte, typischerweise um 500-1000 nm/mm.

Bekannt ist bereits die allgemeine Möglichkeit, die Doppelbrechung eines Polymeren zu verringern, indem man ein Polymeres mit entgegengesetzter Doppelbrechung hinzufügt (J. Hennig, Vortrag auf der Tagung "Neue Polymere" in Bad Nauheim, 14./15.04.1986 : "Polymere als Substrate für optische Plattenspeicher").

Bekannt ist auch die prinzipielle Möglichkeit, durch Kombination von Polycarbonat und modifiziertem Polystyrol ein Material geringer Doppelbrechung zu erhalten (Nikkei Sangyo-Industry Daily vom 07.02.1986 "Sumitomo Chemical Developed New Resin for Erasable Optical Disc").

Die Verwendung der erfindungsgemäßen Mischungen als Substrate für optische Datenspeicher kann wie folgt erläutert werden :

"Substrat" für optische Datenspeicher im erfindungsgemäßen Sinne ist das Material der mechanischen Grundlage einer Datenplatte, das sowohl als Träger für eine Informationsschicht bzw. - ebene dient als auch den Abstandshalter zwischen dieser informationstragenden und der äußeren -ebenen- Plattenoberfläche darstellt.

Der informationstragende Lichtstrahl muß sowohl zum Lesen als auch zum Schreiben unverändert das Substrat durchlaufen - auf dem Weg von der ebenen Plattenoberfläche zur gegenüberliegenden Datenseite ebenso wie - im Falle des Lesestrahls - nach Informationsübertragung von dieser wieder zur äußeren Oberfläche zurück, aus der er zum Detektor hin austritt.

Beispiele für optische Datenspeicher sind beispielsweise Audio-Compact-Disc und die Video-Disc.

## Beispiele

## A Herstellung der Pfropfcopolymeren

### Beispiel 1

a) Pfropfgrundlage

erhalten durch Copolymerisation von 1950 g Styrol und 50 g 4-Trimethylsiloxy-α-methylstyrol in Masse in Gegenwart von 2 g α,α'-Azodiisobutyronitril unter Stickstoff bei 80°C innerhalb von 29 Stunden.

Das mittlere Molekulargewicht, ermittelt durch Gelpermeationschromatographie, wurde zu $\overline{M}_n$ = 68 377 g/mol bestimmt.

b) Pfropfungsreaktion

Innerhalb von einer Stunde werden bei 20-25°C unter Rühren 1,1 kg (11,1 Mol) Phosgen in ein Gemisch

aus 2,223 kg (9,75 mol) 2,2-Bis(4-hydroxyphenyl)-propan (BPA) ; 43,9 g (≙ 3 mol % bezogen auf BPA) p-tert.-Butylphenol ; 2,3 kg 45%iger Natronlauge ; 40 l Wasser, 20 kg Chlorbenzol und 1,95 kg der unter a) beschriebenen Pfropfgrundlage gelöst in 20 kg Methylenchlorid eingeleitet. Anschließend werden 19 ml (≙ 1 mol % bezogen auf BPA) N-Ethylpiperidin zugesetzt und 1 h lang nachgerührt. Die organische Phase wird abgetrennt, elektrolytfrei gewaschen und nach Abdestillieren des Methylenchlorids bei 300°C extrudiert. Es wurden 3,9 kg Produkt erhalten, mit einer rel. Lösungsviskosität $\pi_{rel}$ = 1,482. Das berechnete Molekulargewicht der Polycarbonatseitenäste/Pfropfstelle beträgt $\overline{M}_n$ = 13.293 g/mol, was einem Polykondensationsgrad $\overline{p}$ von 52 entspricht.

Beispiel 2

a) Pfropfgrundlage

erhalten durch Copolymerisation von 222 g Vinyltoluol und 5 g 4-Trimethylsiloxy-α-methylstyrol in Masse in Gegenwart von 0,2 g α,α'-Azodiisobutyronitril unter Stickstoff bei 80°C innerhalb von 24 Stunden. Das mittlere Molekulargewicht ermittelt durch Gelpermeationschromatographie, wurde zu $\overline{M}_n$ = 63.219 g/mol bestimmt.

b) Pfropfungsreaktion

Innerhalb von einer halben Stunde werden bei 20-25°C unter Rühren 15 g (0,15 mol) Phosgen in ein Gemisch aus 22,8 g (0,1 mol) 2,2-Bis(4-hydroxyphenyl)-propan (BPA) ; 450 mg (= 3 mol% bezogen auf BPA) p-tert.-Butylphenol ; 20 g (0,5 mol) Natriumhydroxid ; 400 ml Wasser und 20 g der unter b) beschriebenen Pfropfgrundlage gelöst in 400 ml Methylenchlorid eingeleitet. Nach Zugabe von 0,14 ml N-Ethylpiperidin wird noch 1/2 h lang nachgerührt. Die organische phase wird abgetrennt, elektrolytfrei gewaschen, getrocknet und eingeengt. Es wurden 43,8 g Produkt erhalten mit einer Lösungsviskosität $\pi_{rel}$ = 1.328.

Das berechnete Molekulargewicht der Polycarbonatseitenäste/Pfropfstelle beträgt 10.459 g/mol, was einem Polykondensationsgrad p von 41 entspricht.

B Herstellung der Mischungen

Im folgenden sind die in den Beispielen und Vergleichsbeispielen verwendeten Materialien beschrieben.

Die angegebenen Lösungsvkositäten wurden in Methylenchlorid bei 5 g/l bei 25°C ermittelt.

I) Polycarbonat (PC) aus Bisphenol A, hergestellt gemäß DE 2 842 005, mit einer rel. Lösungsviskosität $\pi_{rel}$ = 1,20 (gemessen in Methylenchlorid bei 5 g/l bei 25°C) entspricht einem $M_w$ von 18 500.

II) Polystyrol (PS) mit einer rel. Lösungsviskosität $\pi_{rel}$ = 1,597 entspricht einem $M_w$ von 350000.

III) Polyvinyltoluol (PVT) mit einer rel. Lösungsviskosität $\pi_{rel}$ = 1,328 entspricht einem $M_w$ von 155000.

Die Probenpräparation für die morphologischen Untersuchungen der erfindungsgemäßen Mischungen sowie der Vergleichsbeispiele erfolgte durch Lösungscompoundierung der Einzelkomponenten. Aus diesen Lösungen wurde nach bekannten Verfahren 50 µm Gießfolien hergestellt, von denen anschließend Ultramicrotomschnitte mit einem LKB Ultratome III angefertigt wurden. Mit dieser Art der Probenpräparation sollte gewährleistet werden, daß die mikroskopischen Aufnahmen ein repräsentatives Bild des thermodynamischen Gleichgewichtszustandes der Polymermischungen wiedergegeben. Die Morphologie der Polymerblends wurde in einem Lichtmikroskop (Leitz Dialus Pol) im polarisierten Durchlicht sowie in einem Transmissionselektronenmikroskop (EM 400, Philips) studiert.

In den folgenden Beispielen werden polycarbonatreiche Polymermischungen, bestehend aus 60 Gew.-% Polycarbonat und 40 Gew.-% Styrolpolymeren, beschrieben.

Bei den erfindungsgemäßen Polymermischungen in den Beispielen 3-6, ergibt sich die Gesamtmenge von 60 Gew.-% an Polycarbonat als Summe aus dem Gewichtsanteil an Polycarbonat in der zugesetzten Menge an Pfropfcopolymer plus der zugesetzten Menge an Homo-Polycarbonat. Dementsprechend ergeben sich die Gesamtmenge an Styrolpolymeren von 40 Gew.-% als Summe aus dem Gewichtsanteil an Styrolpolymeren in der zugesetzten Menge an Pfropfcopolymer plus der zugesetzten Menge an Styrolpolymeren.

In den lichtmikroskopischen Aufnahmen (im weiteren Text als LM-Aufnahmen abgekürzt) erscheint die kontinuierliche Polycarbonatmatrix im polarisierten Durchlicht heller als die in disperser Phase vorliegenden Styrolpolymeren. Bei den transmissionselektronenmikroskopischen Aufnahmen erscheint die Polycarbonatmatrix hingegen dunkler als die dispergierte Styrolpolymerphase. Die bessere Verträglichkeit der erfindungsgemäßen Mischungen wurde anhand der aus den transmissionselektronenmikroskopischen Aufnahmen (im weiteren Text als TEM-Aufnahmen abgekürzt) ermittelten Domänengröße der Styrolpolymerphase beurteilt.

Vergleichsbeispiel 1

60 Tle. Polycarbonat werden mit 40 Tle. Polystyrol in 1000 Tln. Methylenchlorid aufgelöst. Aus dieser Lösung wurde eine 50 µm Gießfolie angefertigt. LM = Figur 1, Vergrößerung 500 : 1.

Vergleichsbeispiel 2

Aus der Lösung von 60 Tln. Polycarbonat, 40 Tln. Polyvinyltoluol und 1000 Tln. Methylenchlorid konnte keine für die morphologischen Untersuchungen geeignete Folie hergestellt werden, da die hohe Delaminierungstendenz dazu führt, daß die Einzelpolymere in der Folie separate Schichten bilden.

Beispiele 3-5

Es wurden jeweils 55 Tle. Polycarbonat, 35 Tle. Styrolpolymeres und 10 Tle. Pfropfcopolymer in 1000 Tln. Methylenchlorid aufgelöst und aus diesen Lösungen anschließend 50 µm Gießfolien hergestellt. Die genaue Zusammensetzung der erfindungsgemäßen Polymermischungen in Gew.-% sowie die mittelre Domänengröße sind in Tabelle 1 zusammengefaßt.
TEM-Aufnahme von Beispiel 3 = Figur 2, Vergrößerung
LM-Aufnahme von Beisipel 4 = Figur 3, Vergrößerung 500 : 1
TEM-Aufnahme von Beispiel 4 = Figur 4, Vergrößerung 7500 : 1
LM-Aufnahme von Beispiel 5 = Figur 5, Vergrößerung 500 : 1
TEM-Aufnahme von Beispiel 5 = Figur 6, Vergrößerung 7500 : 1.

**Tabelle 1:** Zusammensetzung und Domänengröße der Styrolpolymerenphase in den Vergleichbeispielen 1 und 2 sowie in den Beispielen 3-5

| Beispiele | PC | PS | PVT | Pfropfcopolymer polymer Bsp.1 | Bsp.2 | Domänengröße in µm |
|---|---|---|---|---|---|---|
| Vergleichs-Beispiel 1 | 60 | 40 | - | - | - | 6-80 |
| Vergleichs-Beispiel 2 | 60 | - | 40 | - | - | nicht bestimmbar |
| Beispiele | | | | | | |
| 3 | 55 | 35 | - | 10 | - | 0,5-3,0 |
| 4 | 55 | - | 35 | 10 | - | 0,6-5,3 |
| 5 | 55 | - | 35 | - | 10 | 1,6-5,3 |

Beispiel 6

Gemischt wurden wechselnde Anteile Polycarbonat I), Polystyrol II) und Pfropfcopolymer des Beispiels 1 durch Compoundierung an einer ZSK 32 bei 270-290°C. Aus den erhaltenen Compounds wurden Compact Discs bei einer Massetemperatur von 340°C spritzgegossen. Die Doppelbrechung der Mischungen wurde beurteilt durch Messung des Gangunterschiedes in Abhängigkeit von den Raumrichtungen in der Mitte zwischen Plattenachse und -rand (Tabelle 2).

<u>Tabelle 2:</u> Doppelbrechung von Compact-Disk (120 mm ø) aus Polycarbonat I)/Polystyrol II) Pfropfcopolymer des Beispiels 1

Messungen des Gangunterschieds in der Mitte zwischen Plattenachse und -rand im Durchlicht (axial) sowie an den Querschnitten tangential und radial.

| Substratzusammensetzung in Gew.-% | | | Gangunterschied/ $mm \cdot mm^{-1}$ | | |
|---|---|---|---|---|---|
| PC I) | PS II) | Pfropfcopolymer des Beispiels 1 | Durchlicht (axial) | tangential | radial |
| 58,75 | 38,75 | 2,5 | 41 | 139 | -157 |
| 57,50 | 37,50 | 5,0 | 17 | 132 | -158 |
| 55,00 | 35,00 | 10,0 | 34 | 163 | -185 |

## Ansprüche

1. Verfahren zur Herstellung von Vinylcopolymerisaten mit aufgepfropften Polycarbonatketten, deren Vinylcopolymerisatpfropfgrundlage ein $\overline{M}n$ (Zahlenmittelmolekulargewicht, ermittelt durch Gelpermeationschromatographie von 45000 bis 95000 hat, deren Polycarbonatketten einen Polykondensationsgrad an wiederkehrenden Carbonatstruktureinheiten von 35 bis 70 haben, und die ein Gewichtsverhältnis von Vinylcopolymerisatpfropfgrundlage zu aufgepfropften Polycarbonatketten zwischen 35 Gew.-% zu 65 Gew.-% und 55 Gew.-% zu 45 Gew.-% haben, dadurch gekennzeichnet, daß man 95 mol-% bis 99,5 Mol-% an Styrol und 5 Mol-% bis 0,5 Mol-% an Verbindungen der Formel (I)

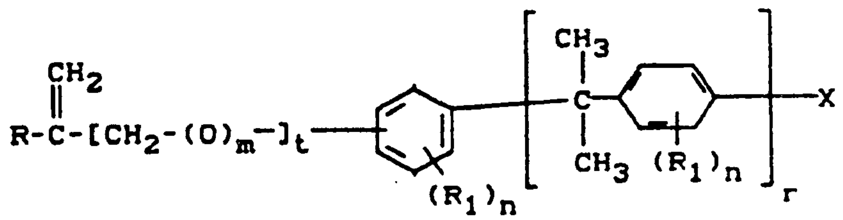

(I)

worin

R = H oder $C_1$-$C_4$-Alkyl,
$R_1$ = Cl, Br, $C_1$-$C_4$-Alkyl, Cyclohexyl oder $C_1$-$C_4$-, Alkoxy
m = 0 oder 1,
n = 0, 1 oder 2,
r = 0 oder 1,
t = 0 oder 1 und
X = $-O-Si(CH_3)_3$ sind,

durch radikalische initierte Massepolymerisation bis zu einem gewünschten Molekulargewicht ($\overline{M}n$, Zahlenmittelmolekulargewicht) zwischen 45000 und 95000 nach bekannten Verfahren copolymerisiert, und danach das Polymerisat ohne Isolierung mit Diphenolen, Phosgen und Monophenolen in wäßrig-alkalischer Phase unter Zusatz eines inerten organischen Lösungsmittels unter den Bedingungen des Zweiphasengrenzflächenverfahrens umsetzt, wobei die Menge an Diphenol so gewählt ist, daß der Gehalt an Polycarbonatketten im gepfropften Vinylcopolymerisat zwischen 65 Gew.-% und 45 Gew.-%, bezogen auf das Gesamtgewicht des gepfropften Vinylcopolymerisats inclusive aufgepfropften Polycarbonatketten, beträgt, und wobei die Menge an Kettenabbrecher so bemessen ist, daß die mittlere Kettenlänge der aufgepfropften Polycarbonatseitenketten jeweils zwischen 35 und 70 wiederkehrende Carbonatstrukureinheiten aufweist, und wobei die Menge an inerten organischen Lösungsmittel so bemessen sein muß, das die Endviskosität der organischen Phase der Reaktionsmischung zwischen 5 und 25 mPa·s liegt.

2. Gepfropfte Vinylcopolymerisate, erhältlich nach dem Verfahren des Anspruchs 1.

3. Gepfropfte Vinylcopolymerisate gemäß Anspruch 2, dadurch gekennzeichnet, daß sie Struktureinheiten der Formel (IIIa) enthalten

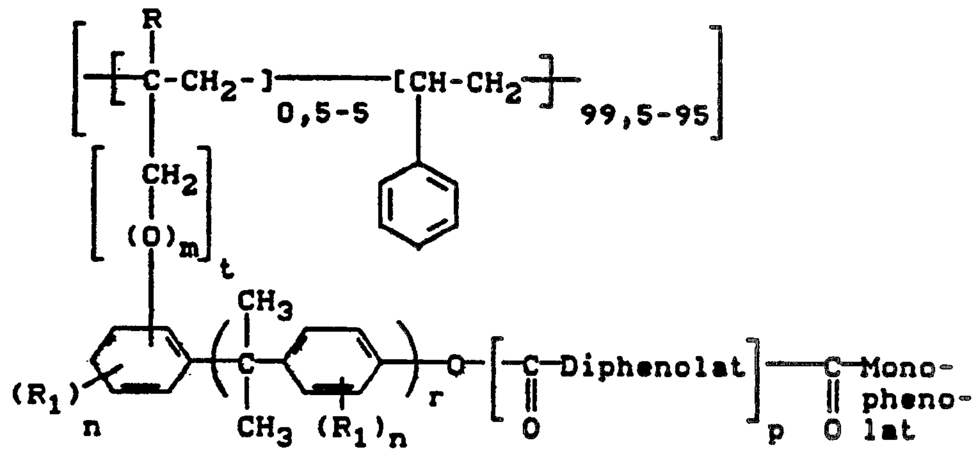

worin

R, $R_1$, m, n, r und t die für Formel I im Anspruch 1 genannte Bedeutung hanben, p eine ganze Zahl zwischen 35 und 70 ist und Diphenolat und Monophenolat Reste sind, die durch Abzug der phenolischen H-Atome aus Diphenolen bzw. Monophenolen resultieren.

4. Verwendung der gepfropften Vinylcopolymerisate gemäß Ansprüche 2 und 3 als Modifikatoren für Mischungen aus thermoplastischen Polycarbonaten und thermoplastischen Polystyrolen.

5. Mischungen von

A) 70 bis 20 Gew.-% eines thermoplastischen, aromatischen Polycarbonats auf Basis von Diphenolen der Formel (II)

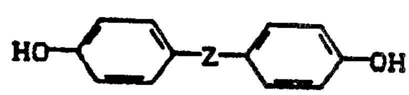

(II)

worin

Z eine Einfachbindung, ein Alkylen-Rest mit 1 bis 8 C-Atomen, ein Alkyliden-Rest mit 2 bis 12 C-Atomen, ein Cyclohexyliden-Rest, ein Benzyliden-Rest ein Methyl-benzyliden-Rest, ein Bis-(phenyl)-methylen-Rest, $-S-$, $-SO_2-$, $-CO-$ oder $-O-$ ist, mit $\overline{M}w$ (Gewichtsmittelmolekulargewichten, ermittelt in bekannter Weise über die relative Lösungsviskosität) zwischen 15000 und 120000, und

B) 30 bis 80 Gew.-% eines thermoplastischen Polystyrols mit einem $\overline{M}w$ (Gewichtsmittelmolekulargewicht, ermittelt durch Gelpermeationschromatographie in bekannter Weise) von 20000 bis 400000, dadurch gekennzeichnet, daß sie 0,5 Gew.-% bis 15 Gew.-%, bezogen jeweils auf 100 Gew.-% an A) +B), an gepfropften Vinylcopolymerisat gemäß Anspruch 2 erhalten.

6. Mischungen gemäß Anspruch 5, dadurch gekennzeichnet, daß sie 1,0 Gew.-% bis 12 Gew.-% an gepfropften Vinylcopolymerisat enthalten.

7. Mischungen gemäß Anspruch 5, dadurch gekennzeichnet, daß sie 2 Gew.-% bis 9 Gew.-% an gepfropften Vinylcopolymerisat enthalten.

8. Verwendung der Mischungen des Anspruchs 5 als Substrate für optische Datenspeicher.

## Revendications

1. Procédé de préparation de copolymères vinyliques portant des chaînes de polycarbonate greffées, dont le copolymère vinylique servant de support de greffage présente un poids moléculaire $\overline{M}n$ (moyenne en nombre, déterminé par chromatographie de perméation de gel) de 45000 à 95000, dont les chaînes de polycarbonate ont un degré de polycondensation de 35 à 70 motifs de structure répétés de carbonate, avec un rapport en poids de 35 : 65% à 55 : 45% entre le copolymère vinylique servant de support de greffage et les chaînes de polycarbonate greffées, caractérisé en ce que l'on polymérise en masse, avec induction radicalaire, de 95

mol% a 99,5 mol% de styrène et de 5 mol% a 0,5 mol% de composés de formule I :

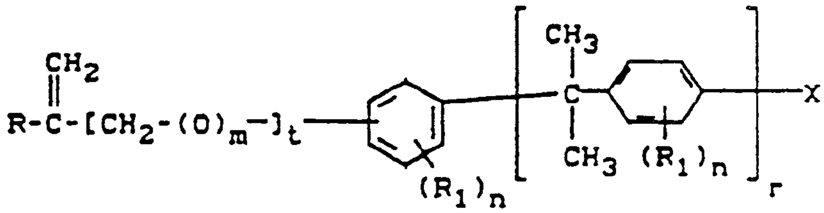

(I)

dans laquelle

R = H ou alkyle en $C_1$-$C_4$
$R_1$ = Cl, Br, alkyle en $C_1$-$C_4$, cyclohexyle ou alcoxy en $C_1$-$C_4$,
m = 0 ou 1,
n = 0, 1 ou 2,
r = 0 ou 1,
t = 0 ou 1 et
X = $-O-Si(CH_3)_3$,

jusqu'au poids moléculaire recherché ($\overline{M}n$, moyenne en nombre) de 45000 à 95000, selon des modes opératoires connus, puis on fait réagir le polymère, sans l'isoler, avec des diphénols, du phosgène et des monophénols en phase alcaline aqueuse avec adjonction d'un solvant organique inerte dans les conditions du procédé à l'interface de deux phases, la quantité de diphénol étant choisie de manière que la teneur en chaînes de polycarbonate du copolymère vinylique greffé se situe entre 65% en poids et 45% en poids, par rapport au poids total du copolymère vinylique greffé, y compris les chaînes de polycarbonate greffées, et la quantité de coupeur de chaînes étant réglée de manière que la longueur de chaîne moyenne des chaînes latérales de polycarbonate greffées représente dans tous les cas de 35 à 70 motifs de structure repétés de carbonate, la quantité de solvant organique inerte devant être réglée de manière que la viscosité finale de la phase organique du mélange de réaction se situe entre 5 et 25 mPa·s.

2. Copolymères vinyliques greffés obtenus par le procédé de la revendication 1.

3. Copolymères vinyliques greffés selon la revendication 2, caractérisés en ce qu'ils contiennent des motifs de structure de formule IIIa

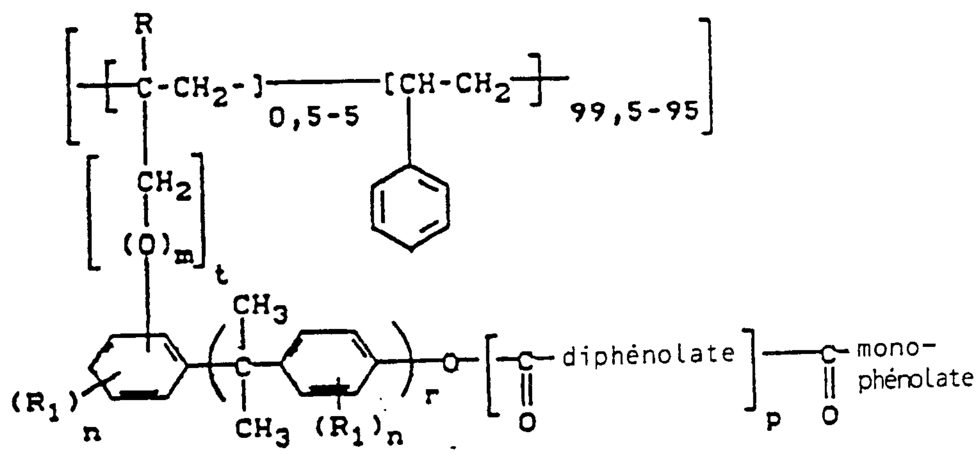

dans laquelle

R, $R_1$, m, n, r, et t ont les significations indiquées en référence a la formule I dans la revendication 1, p est un nombre entier allant de 35 à 70 et les radicaux diphénolate et monophénolate sont les radicaux obtenus à partir de diphénols ou de monophénols par élimination des atomes d'hydrogène phénoliques.

4. Utilisation des copolymères vinyliques greffés selon les revendications 2 et 3 en tant qu'agents modifiants pour des mélanges de polycarbonates -thermoplastiques et de polystyrènes thermoplastiques.

5. Mélanges de

A) 70 à 20% en poids d'un polycarbonate aromatique thermoplastique à base de diphénols de formule II

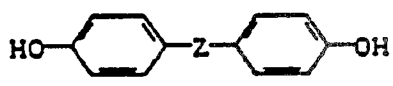

(II)

dans laquelle

Z représente une liaison simple, un groupe alkylène en $C_1$-$C_8$, alkylidène en $C_2$-$C_{12}$, cyclohexylidène, benzylidène, méthylbenzylidène, bis-(phényl)-méthylène, –S–, –$SO_2$–, –CO– ou –O–, à un poids moléculaire moyen $\overline{M}w$ (moyenne en poids, déterminé de manière connue par l'intermédiaire de la viscosité relative en solution) de 15000 à 120000 et

B) 30 à 80% en poids d'un polystyrène thermoplastique présentant un poids moléculaire $\overline{M}w$ (moyenne en poids, déterminé par chromatographie de perméation de gel de manière connue) de 20000 à 400000, caractérisés en ce qu'ils contiennent de 0,5 a 15% a en poids, pour 100% a en poids de A + B, d'un copolymère vinylique greffé selon la revendication 2.

6. Mélanges selon la revendication 5, caractérisés en ce qu'ils contiennent de 1,0 à 12% a en poids du copolymère vinylique greffé.

7. Mélanges selon la revendication 5, caractérisés en ce qu'ils contiennent de 2 à 9% en poids du copolymère vinylique greffé.

8. Utilisation des mélanges de la revendication 5 en tant que supports pour des enregistreurs de données optiques.

## Claims

1. A process for the production of vinyl copolymers with grafted-on polycarbonate chains, of which the vinyl copolymer graft base has an $\overline{M}n$ (number average molecular weight, as determined by gel permeation chromatography) of 45,000 to 95,000, of which the polycarbonate chains have a degree of polycondensation of recurring carbonate structural units of 35 to 70 and in which the ratio by weight of vinyl copolymer graft base to grafted-on polymer chains is between 35% by weight to 65% by weight and 55% by weight to 45% by weight, characterized in that 95 mol-% to 99.5 mol-% of styrene and 5 mol-% to 0.5 mol-% of compounds corresponding to the following formula

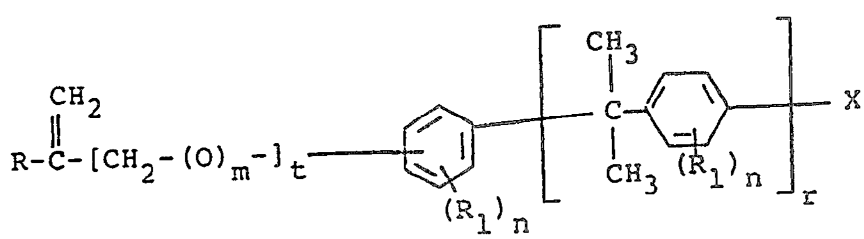

(I)

in which

| | |
|---|---|
| R = | H or $C_{1-4}$ alkyl, |
| R1 = | Cl, Br, $C_{1-4}$ alkyl, cyclohexyl or $C_{1-4}$ alkoxy, |
| m = | 0 or 1, |
| n = | 0, 1 or 2, |
| r = | 0 or 1, |
| t = | 0 or 1 and |
| X = | –0-Si($CH_3$)$_3$, |

are copolymerized in known manner by radical-initiated bulk polymerization to a desired molecular weight ($\overline{M}n$, number average molecular weight) of 45,000 to 95,000, after which the polymer is reacted without isolation with diphenols, phosgene and monophenols under the conditions of the two-phase interfacial process in aqueous-alkaline phase with addition of an inert organic solvent, the quantity of diphenol being selected so that the content of polycarbonate chains in the grafted vinyl

copolymer is between 65% by weight and 45% by weight, based on the total weight of the grafted vinyl copolymer, including grafted-on polycarbonate chains, and the quantity of chain terminator being gauged so that the average chain length of the grafted-on polycarbonate side chains comprises between 35 and 70 recurring carbonate structural units and the quantity of inert organic solvent having to be gauged in such a way that the final viscosity of the organic phase of the reaction mixture is between 5 and 25 mPa·s.

2. Grafted vinyl copolymers obtainable by the process claimed in claim 1.

3. Grafted vinyl copolymers as claimed in claim 2, characterized in that they contain structural units corresponding to the following formula

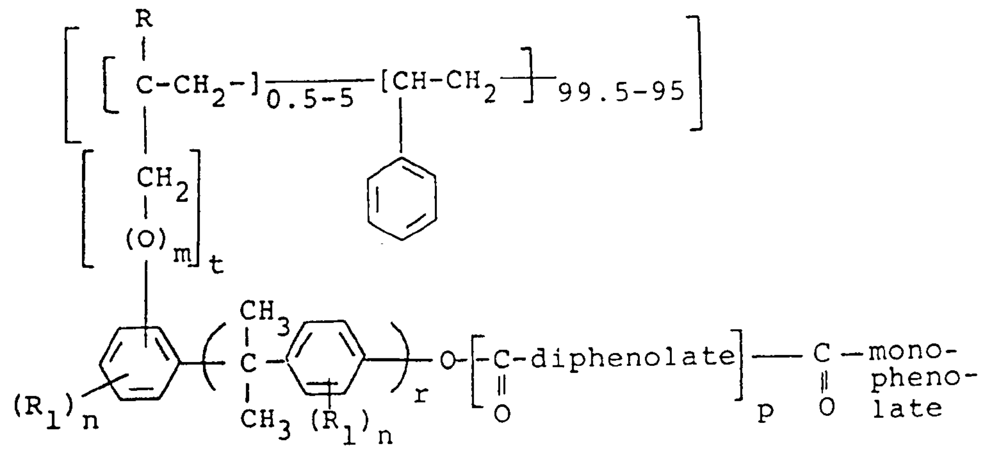

in which

R, $R_1$, m, n, r and t have the meaning defined for formula I in claim 1, p is an integer of 35 to 70 and diphenolate and monophenolate are residues obtained by removal of the phenolic H atoms from diphenols and monophenols.

4. The use of the grafted vinyl copolymers claimed in claims 2 and 3 as modifiers for mixtures of thermoplastic polycarbonates and thermoplastic polystyrenes.

5. Mixtures of

A) 70 to 20% by weight of a thermoplastic aromatic polycarbonate based on diphenols corresponding to the following formula

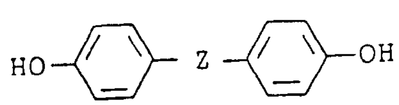 (II)

in which

Z is a single bond, a $C_{1-8}$ alkylene radical, a $C_{2-12}$ alkylidene radical, a cyclohexylidene radical, a benzylidene radical, a methylbenzylidene radical, a bis(phenyl)-methylene radical, $-S-$, $-SO_2-$, $-CO-$ or $-O-$, with $\overline{Mw}$ values (weight average molecular weights, as determined in known manner via the relative solution viscosity) of 15,000 to 120,000, and

B) 30 to 80% by weight of a thermoplastic polystyrene having an $\overline{Mw}$ value (weight average molecular weight determined in known manner by gel permeation chromatography) of 20,000 to 400,000, characterized in that they contain 0.5% by weight to 15% by weight, based in each case on 100% by weight A) +B), of grafted vinyl copolymer obtainable in accordance with the claim 2.

6. Mixtures as claimed in claim 5, characterized in that they contain 1.0% by weight to 12% by weight grafted vinyl copolymer.

7. Mixtures as claimed in claim 5, characterized in they contain 2% by weight to 9% by weight grafted vinyl copolymer.

8. The use of the mixtures claimed in claim 5 as substrates for optical data storage media.

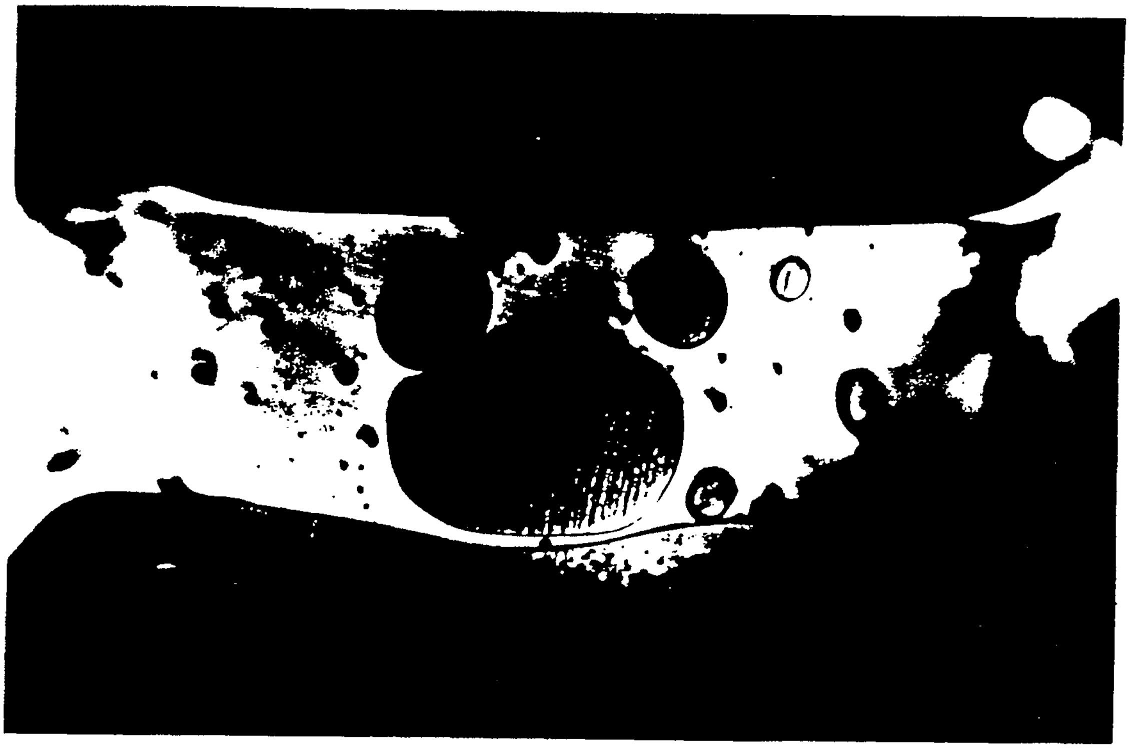

FIG. 1

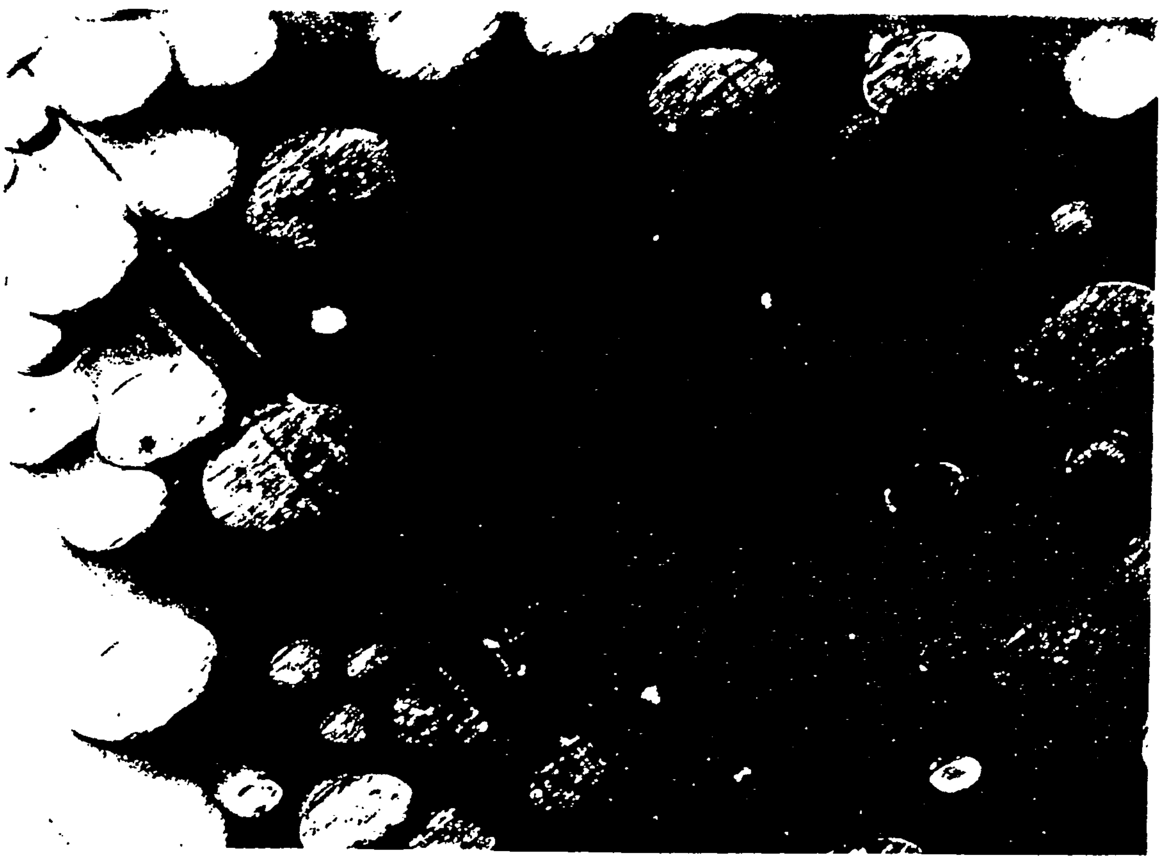

FIG. 2

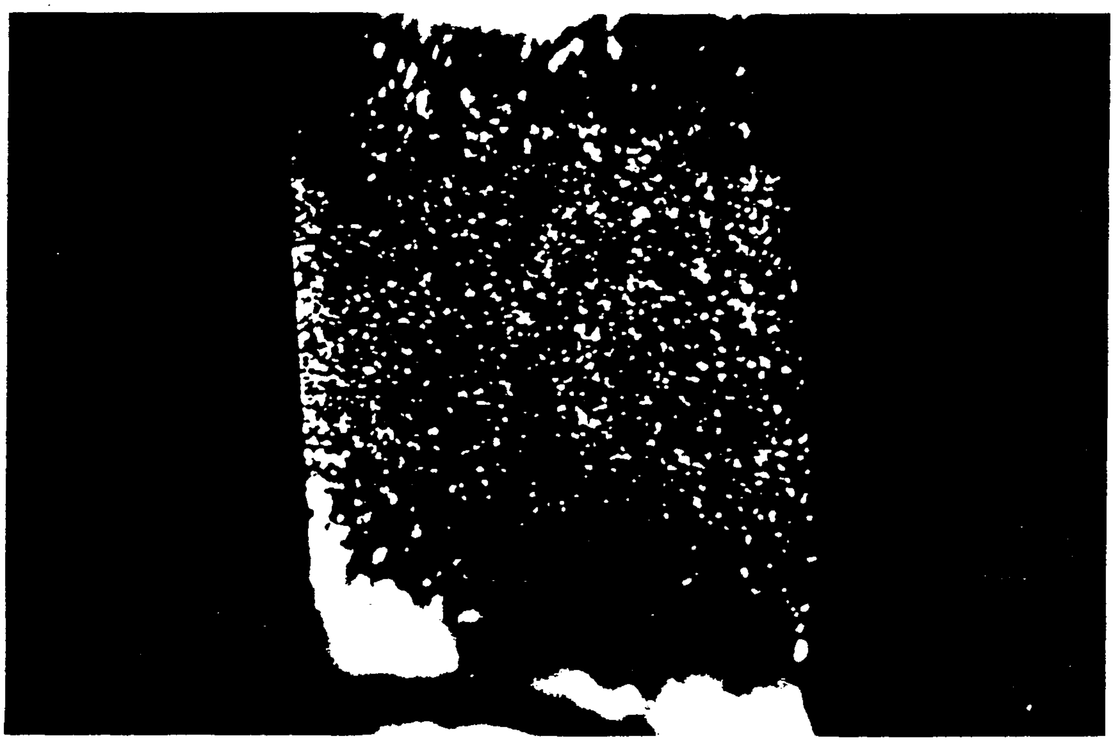


FIG. 3

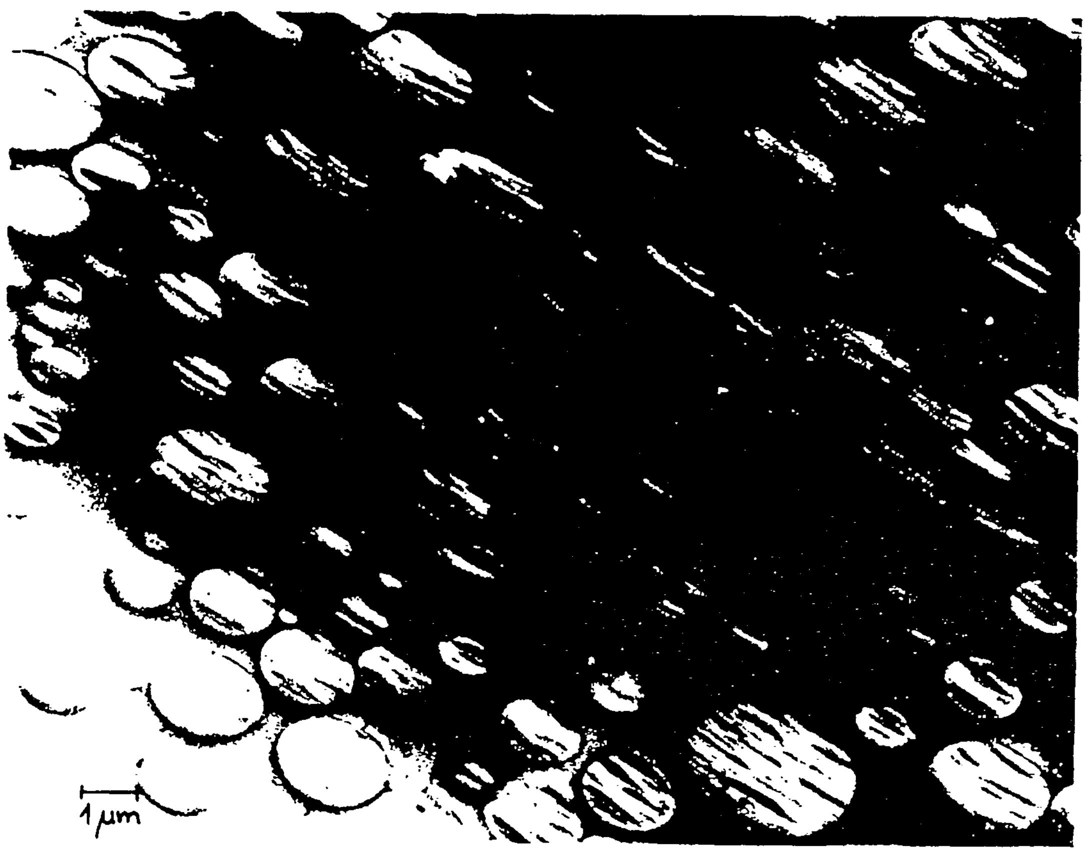


FIG. 4

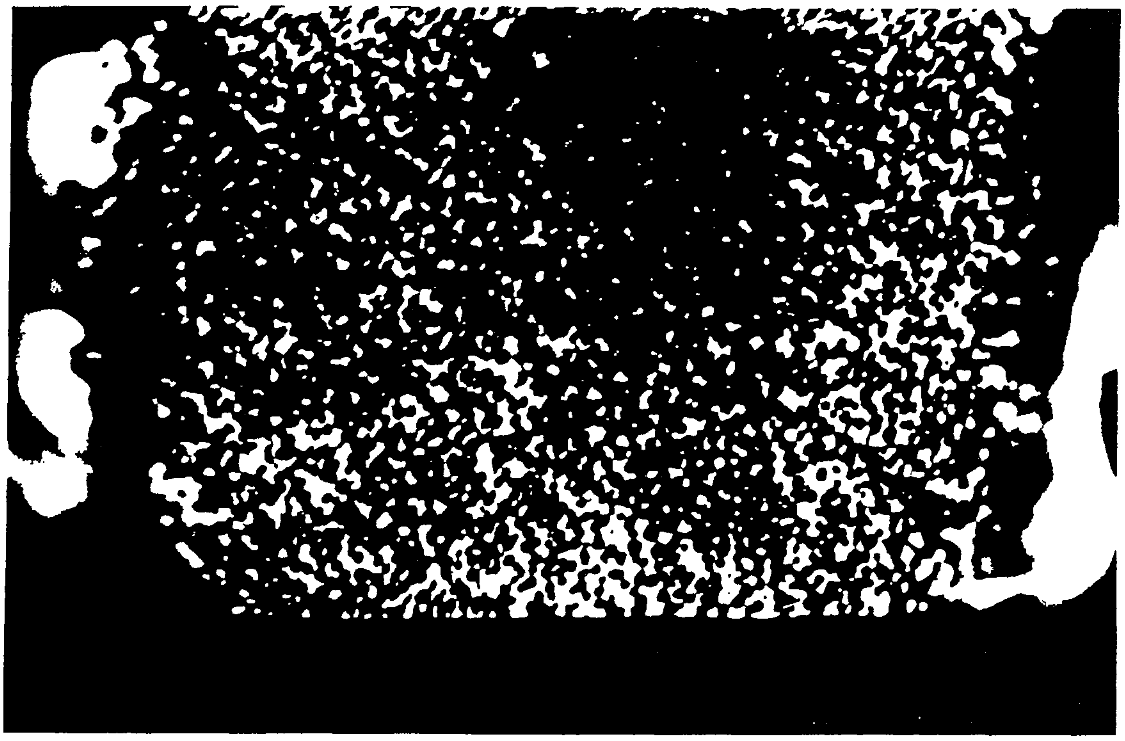


FIG. 5

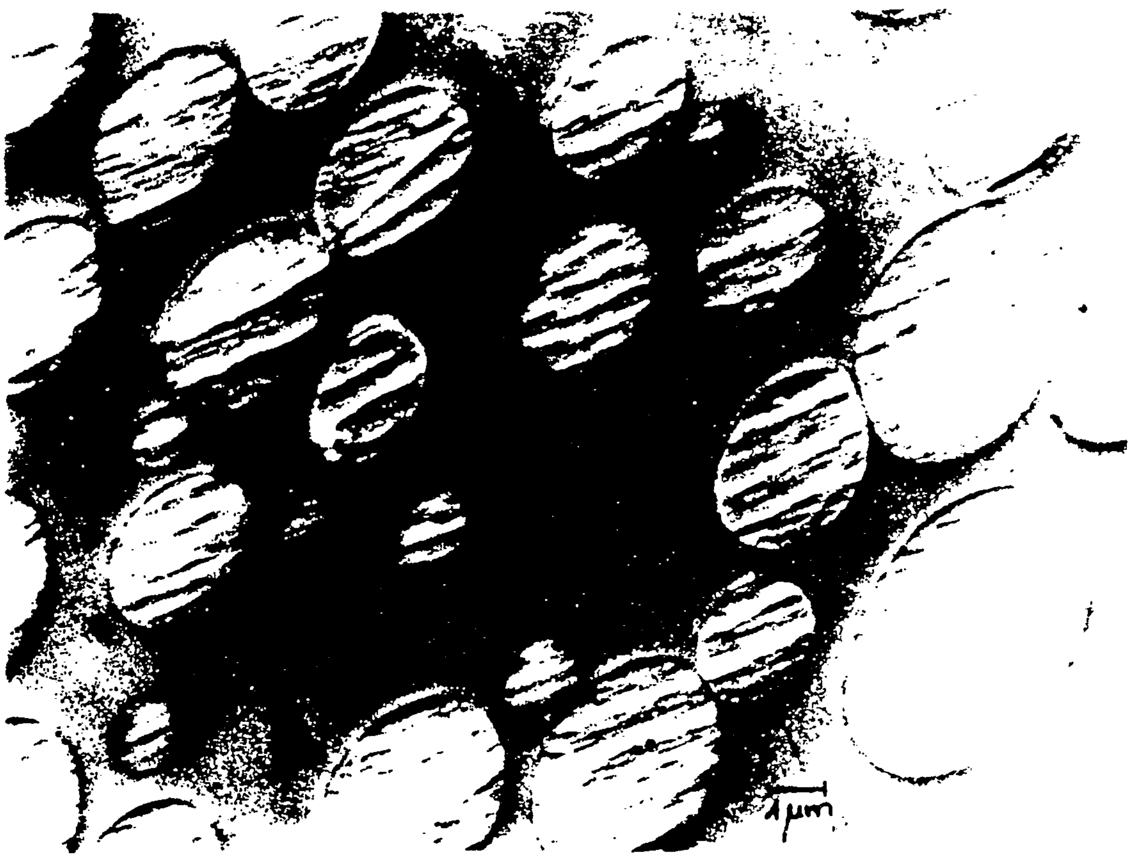


FIG. 6